# EUROPÄISCHE PATENTSCHRIFT

(11) **EP 0 330 931 B1**
(45) Veröffentlichungstag und Bekanntmachung des Hinweises auf die Patenterteilung: **13.04.1994**
(21) Anmeldenummer: 89102734.4
(22) Anmeldetag: 17.02.1989
(51) Int. Cl.: F16H 57/02

(54) **Gebaute Getriebewelle**
Assembled gear axle
Arbre de transmission assemble

(30) Priorität: 24.02.1988 DE 3805775
(43) Veröffentlichungstag der Anmeldung: 06.09.1989
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: COHAUSZ HASE DAWIDOWICZ & PARTNER

(56) Entgegenhaltungen:
- EP-A- 0 309 899
- EP-A- 0 328 007
- CH-A- 98 614
- DE-A- 3 425 600
- DE-A- 3 803 684
- DE-C- 924 666
- DE-U- 8 713 285
- FR-A- 744 131

## Beschreibung

Die Erfindung betrifft eine gebaute Getriebewelle, bei der einzelne Antriebselemente drehfest auf einer Hohlwelle festgelegt sind, wobei zumindest ein Antriebselement mit mindestens zwei durch eine Hülse verbundenen Scheibenkörpern, insbesondere Zahnrädern, in einstückiger Bauweise ausgeführt ist und die Verbindung zwischen Hohlwelle und Antriebselementen im wesentlichen durch Kraft- bzw. Reibschluß zwischen der plastisch aufgeweiteten Hohlwelle und den elastisch vorgespannten Antriebselementen erfolgt.

Eine gebaute Getriebewelle, bei der eine Hohlwelle in einem Gesenk in der Weise aufgeweitet wird, daß im Bereich der Zahnräder durch polygonförmigen Querschnitt der Hohlwelle ein formschlüssiger Eingriff entsteht, ist aus der DE-A-34 25 600 bekannt. Gebaute Getriebewellen, bei denen die Verbindung zwischen Hohlwelle und Antriebselementen im wesentlichen durch Reibschluß zwischen der plastisch aufgeweiteten Hohlwelle und den elastisch vorgespannten Antriebselementen erfolgt, ist in der DE-A-38 03 684 vorbeschrieben. Diese Welle ist insbesondere aus einzelnen Hülsen und Rohrabschnitten zusammengesetzt.

Aus der DE-U-87 13 285 ist eine Welle der eingangs genannten Art bekannt, die als Nockenwelle ausgeführt ist. Die kraft- bzw. reibschlüssige Verbindung wird hierbei zwischen der Hülse des zumindest einen Antriebselements mit mehreren Scheibenkörpern und der Hohlwelle hergestellt. Die Wandverstärkung der Hohlwelle durch die kurze, unmittelbar anliegende Hülse hat keinen großen Einfluß auf die Biege- und Torsionsfestigkeit der Antriebswelle.

Der vorliegenden Erfindung liegt die Aufgabe zugrunde, die Festigkeit von Wellen der genannten Art zu verbessern. Die Lösung dafür besteht darin, daß das zumindest eine Antriebselement mit einer zwischen zumindest zwei Zahnscheiben in der Nähe der Verzahnungen ansetzenden Hülse ausgebildet ist, die radialen Abstand zur Hohlwelle aufweist.

Hiernach ist die reibschlüssige Verbindung des Antriebselementes im Bereich der Naben der Zahnscheiben oder in unmittelbarem Anschluß daran herzustellen, wobei in axialer Richtung zwei einzelne Abschnitte der Hohlwelle plastisch aufzuweiten sind. Durch den wesentlich größeren Durchmesser der die Zahnscheiben verbindenden Hülse ist jedoch ein Gewinn an Biegesteifigkeit und Torsionssteifigkeit, gegebenenfalls auch bei geringem Materialaufwand, möglich. Zur weiteren Erhöhung der Festigkeit können hierbei längsgerichtete, im Querschnitt radial zur Achse verlaufende Versteifungsrippen zwischen den Zahnscheiben eingezogen werden.

Die Vorteile in fertigungstechnischer Hinsicht bestehen darin, daß die Gesamtzahl der Bauteile gering ist, indem beispielsweise zwei Zahnräder als ein einziges relativ unkompliziertes Gußteil hergestellt werden können und gemeinsam mit der Welle verbunden sind. Die Vorteile bezüglich der Festigkeit ergeben sich durch die Doppelwandigkeit der erfindungsgemäß gestalteten Welle, durch die sowohl die Biegefestigkeit als auch die Torsionsfestigkeit deutlich verbessert werden kann. Sinnvollerweise werden diejenigen Zahnkränze zu einem über eine Hülse verbundenen Antriebselement zusammengefaßt, die im Bereich höchster Biegebeanspruchungen und/oder Torsionsbeanspruchungen der Welle liegen. Insbesondere ist das Zusammenfassen von solchen Zahnrädern vorteilhaft, die beide gleichzeitig im unmittelbaren Kraftfluß über die Welle liegen.

Zur reibschlüssigen Verbindung der Antriebselemente mit der Hohlwelle sind relativ zu den Radscheiben symmetrisch oder einseitig nach innen oder nach außen gerichtete Hülsenansätze möglich, wobei die nach innen gerichteten Hülsenansätze in günstiger Weise die Bauteillänge verkürzen. Bei nach außen gerichteten Hülsenansätzen kann die Festigkeit der Verbindung mit der Hohlwelle dadurch vergrößert werden, daß außen nochmals Rohrstücke aufgeschoben werden, die nach der plastischen Umformung der Hohlwelle gegenüber den Hülsenansätzen elastisch vorgespannt bleiben. Es wird hiermit ein radialer Einspanneffekt erreicht, der insbesondere dann günstig ist, wenn das Antriebselement mit den beiden Radscheiben selber aus einem weniger elastischen Material, nämlich Gußwerkstoff besteht, wobei grundsätzlich Temperguß, insbesondere GTS 65 besonders geeignet ist.

Die auf die Hülsenansätze des Antriebselementes aufgeschobenen Rohrstücke können sich axial abgestuft fortsetzen und zusätzlich unmittelbar reibschlüssig mit der Hohlwelle verbunden sein. Auf ihrer Außenseite können sie im übrigen als Lauffläche für Wälzlager dienen. Hierfür spricht insbesondere, daß als Werkstoff für diese Rohrstücke ohnehin ein solcher mit einer gegenüber der Hohlwelle und dem Antriebselement höheren Streckgrenze auszuwählen ist. Es kommt hierfür insbesondere ein Lagerwerkstoff wie z.B. 100 CR 6 in Frage, während das Material der durchgehenden Hohlwelle z.B. aus ST 35 bestehen kann.

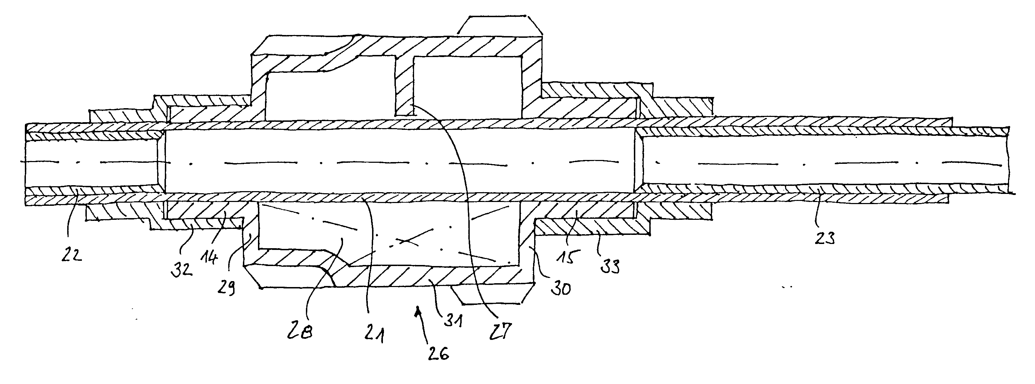

Ein bevorzugtes Ausführungsbeispiel ist in der beigefügten Zeichnung dargestellt und nachstehend beschrieben. Es zeigt eine erfindungsgemäße Welle mit einem Antriebselement, das eine nahe den Verzahnungen zweier Zahnscheiben ansetzende Hülse aufweist.

In der Figur ist eine im wesentlichen durchgehende Hohlwelle 21 erkennbar, in die jeweils am Ende Rohrstücke 22, 23 eingesteckt sind. Auf die Hohlwelle ist ein Antriebselement 26 aufgeschoben, das zwei Zahnscheiben 29, 30 umfaßt, die über eine in der Nähe der Verzahnungen ansetzende Hülse 31 verbunden sind. Im Bereich der Naben schließen sich jeweils Hülsenansätze 14, 15 an die Zahnscheiben an, die unmittelbar die kraft- bzw. reibschlüssige Verbindung zur Hohlwelle 21 herstellen. In der oberen Bildhälfte ist eine in Umfangsrichtung liegende ringförmige Verstärkungsrippe 27 gezeigt, in der unteren Bildhälfte sind alternativ umfangsverteilte längsverlaufende Verstärkungsrippen 28 angedeutet. Auf die Hülsenansätze 14, 15 sind jeweils Rohrstücke 32, 33 aus Lagerwerkstoff aufgeschoben, die sich abgestuft fortsetzen und im Anschluß an die Hülsenansätze unmittelbar mit der Hohlwelle 21 reibschlüssigen Kontakt haben.

## Patentansprüche

1. Gebaute Getriebewelle, bei der einzelne Antriebselemente drehfest auf einer Hohlwelle festgelegt sind, wobei zumindest ein Antriebselement (26) mit mindestens zwei durch eine Hülse (31) verbundenen Scheibenkörpern (29, 30), insbesondere Zahnrädern, in einstückiger Bauweise ausgeführt ist, und die Verbindung zwischen Hohlwelle und Antriebselementen im wesentlichen durch Kraft- bzw. Reibschluß zwischen der plastisch aufgeweiteten Hohlwelle und den elastisch vorgespannten Antriebselementen erfolgt,
dadurch gekennzeichnet,
daß das zumindest eine Antriebselement (26) mit einer zwischen zumindest zwei Zahnscheiben (29, 30) unterschiedlichen Durchmessers in der Nähe der Verzahnungen ansetzenden Hülse (31) ausgebildet ist, die radialen Abstand zur Hohlwelle (21) aufweist.

2. Welle nach Anspruch 1,
dadurch gekennzeichnet,
daß das zumindest eine Antriebselement (26) mit jeweils einem an jeder der Zahnscheiben (29, 30) anschließenden Hülsenansatz (14, 15) ausgebildet ist, der an der reibschlüssigen Verbindung mit der Hohlwelle (21) beteiligt ist.

3. Welle nach Anspruch 2,
dadurch gekennzeichnet,
daß die Hülsenansätze (14, 15) am zumindest einen Antriebselement (26) jeweils axial außenliegend an den Zahnscheiben (29, 30) angeordnet sind.

4. Welle nach Anspruch 2,
dadurch gekennzeichnet,
daß die Hülsenansätze am zumindest einen Antriebselement jeweils axial innenliegend an den Zahnscheiben angeordnet sind.

5. Welle nach einem der Ansprüche 1 bis 4,
dadurch gekennzeichnet,
daß innerhalb der nahe den Verzahnungen ansetzenden Hülse (31) Umfangsrippen (7) oder längsgerichtete Rippen (8) zwischen den Zahnscheiben (29, 30) eingezogen sind.

6. Welle nach einem der Ansprüche 1 bis 5,
dadurch gekennzeichnet,
daß die Hohlwelle aus mehreren ineinandergesteckten Rohrstücken (1, 2, 3, 4; 31, 22, 23) und/oder Hülsen (12, 13; 32, 33) zusammengesetzt ist, die im Bereich ihrer radialen Überdeckung zumindest abschnittsweise miteinander verbunden sind.

7. Welle nach einem der Ansprüche 1 bis 6,
dadurch gekennzeichnet,
daß auf die auf einem inneren Teil (21) der Hohlwelle aufsitzenden Hülsenansätze (14, 15) Rohrstücke (32, 33) aufgeschoben sind, die nach dem plastischen Umformen der Hohlwelle (21) gegenüber den Hülsenansätzen (14, 15) elastisch vorgespannt sind.

8. Welle nach Anspruch 7,
dadurch gekennzeichnet,
daß die Rohrstücke (32, 33) als Lagerinnenringe von Wälzlagern dienen.

9. Welle nach einem der Ansprüche 1 bis 8,
dadurch gekennzeichnet,
daß die Antriebselemente (6, 26) mit mehreren Zahnscheiben aus Gußwerkstoff bestehen.

10. Welle nach einem der Ansprüche 1 bis 9,
dadurch gekennzeichnet,
daß der Werkstoff der aufgeschobenen Rohrstücke (12, 13; 32, 33) eine höheren Streckgrenze hat als der jeweils dazu relativ radial innenliegende Teil der Hohlwelle (1, 2, 3, 4; 21, 22, 23).

## Claims

1. A built-up gear shaft, with which individual drive elements are fixed non-rotationally to a hollow shaft, wherein at least one drive element (26) is integrally formed with at least two disc bodies (29, 30), in particular toothed wheels, which are connected by a sleeve (31), and the connection between the hollow shaft and drive elements is basically provided by a force- or frictional connection between the plastically widened hollow shaft and the elastically pre-stressed drive elements,
characterised in that,
the, at least one, drive element (26) is formed with a sleeve (31) which is placed between at least two toothed discs (29, 30) of different diameter in the vicinity of the tooth configurations, the sleeve being spaced radially from the hollow shaft (21).

2. A shaft according to Claim 1,
characterised in that,
the, at least one, drive element (26) is formed with a sleeve attachment portion (14, 15) which is connected to each of the toothed discs (29, 30), which sleeve attachment portion assists in the frictional connection with the hollow shaft (21).

3. A shaft according to Claim 2,
characterised in that,
the sleeve attachment portions (14, 15) are arranged on at least one drive element (26) which is/are axially disposed on the outside of the toothed discs (29, 30).

4. A shaft according to Claim 2,
characterised in that,
the sleeve attachment portions are arranged on at least one drive element which is/are axially disposed on the inside of the toothed discs.

5. A shaft according to one of Claims 1 to 4,
characterised in that,
peripheral ribs (7) or longitudinally oriented ribs (8) are fitted between the toothed discs (29, 30), inside the sleeve (31) placed near the tooth configurations.

6. A shaft according to one of Claims 1 to 5,
characterised in that,
the hollow shaft is composed of a plurality of interengaging tubular portions (1, 2, 3, 4; 31, 22, 23) and/or sleeves (12, 13; 32, 33) which are connected together sectionally in the region of their radial overlap.

7. A shaft according to one of Claims 1 to 6,
characterised in that,
tubular portions (32, 33) are pushed up onto the sleeve attachment portions (14, 15) sitting on an inner part (21) of the hollow shaft, these tubular portions being elastically pre-stressed relative to the sleeve attachment portions (14, 15) after plastic deformation of the hollow shaft (21).

8. A shaft according to Claim 7,
characterised in that,
the tubular portions (32, 33) act as bearing inner rings of roller bearings.

9. A shaft according to Claims 1 to 8,
characterised in that,
the drive elements (6, 26) with a plurality of toothed discs are made of cast material.

10. A shaft according to one of Claims 1 to 9,
characterised in that,
the material of the tubular portions (12, 13; 32, 33) which are pushed on have a higher elastic limit than the part of the hollow shaft (1, 2, 3, 4; 21, 22, 23) disposed radially inwardly relative thereto.

## Revendications

1. Arbre de transmission en plusieurs pièces, dans lequel des éléments d'entraînement individuels sont fixés en solidarité de rotation sur un arbre creux, au moins un élément d'entraînement (26) étant réalisé en une pièce constituée de deux corps en forme de disques (29, 30), notamment des roues dentées, qui sont reliés par une douille (31), et l'assemblage entre l'arbre creux et les éléments d'entraînement s'effectuant essentiellement par une liaison par friction ou encore par adhérence entre l'arbre creux plastiquement élargi et les éléments d'entraînement élastiquement précontraints,
**caractérisé** en ce que ledit au moins un élément d'entraînement (26) est doté d'une douille (31) qui est radialement distante de l'arbre creux (21) et se trouve à proximité des dentures entre au moins deux disques dentés (29, 30) de diamètres différents.

2. Arbre selon la revendication 1, **caractérisé** en ce que ledit au moins un élément d'entraînement (26) est doté de prolongements de douille respectifs (14, 15) qui se raccordent chacun à un des disques dentés (29, 30) et participent à l'assemblage par friction avec l'arbre creux (21).

3. Arbre selon la revendication 2, **caractérisé** en ce que les prolorgements de douille (14, 15) présents sur ledit au moins un élément d'entraînement (26) sont disposés en application axialement extérieure respective contre les disques dentés (29, 30).

4. Arbre selon la revendication 2, **caractérisé** en ce que les prolongements de douille présents sur ledit au moins un élément d'entraînement sont disposés en application axialement intérieure respective contre les disques dentés.

5. Arbre selon l'une quelconque des revendications 1 à 4, **caractérisé** en ce que des nervures circonférentielles (27) ou des nervures d'orientation longitudinale (28) sont interposées entre les disques dentés (29, 30), à l'intérieur de la douille (31) située à proximité des dentures.

6. Arbre selon l'une quelconque des revendications 1 à 5, **caractérisé** en ce que l'arbre creux est constitué de plusieurs tronçons tubulaires (21, 22, 23) et/ou douilles (32, 33) mutuellement emboîtés qui, dans la région de leur chevauchement radial, sont au moins sectoriellement assemblés entre eux.

7. Arbre selon l'une quelconque des revendications 1 à 6, **caractérisé** en ce qu'on enfile, sur les prolongements de douille (14, 15) reposant sur une partie intérieure (21) de l'arbre creux, des tronçons tubulaires (32, 33) qui, à la suite de la déformation plastique de l'arbre creux (21), sont élastiquement précontraints par rapport aux prolongements de douille (14, 15).

8. Arbre selon la revendication 7, **caractérisé** en ce que les tronçons tubulaires (32, 33) servent de bagues intérieures de roulements.

9. Arbre selon l'une quelconque des revendications 1 à 8, **caractérisé** en ce que les éléments d'entraînement (26) dotés de plusieurs disques dentés sont réalisés en matériau de moulage.

10. Arbre selon l'une quelconque des revendications 1 à 9, **caractérisé** en ce que le matériau des tronçons tubulaires extérieurement enfilés (32, 33) présente une limite d'élasticité supérieure à celle de la partie respective (21, 22, 23) de l'arbre creux qui se trouve en position radialement intérieure par rapport à eux.
